# NEW EUROPEAN PATENT SPECIFICATION

(11) **EP 0 560 866 B2**
(45) Date of publication and mention of the opposition decision: **04.07.2001**
(45) Mention of the grant of the patent: 28.05.1997
(21) Application number: 92900862.1
(22) Date of filing: 09.12.1991
(51) Int. Cl.: C03B 37/07

(54) **A METHOD OF CONTROLLING FIBRE GENERATION IN THE MANUFACTURE OF MINERAL FIBRES FROM MINERAL MELT WITH THE AID OF CENTRIFUGAL FORCE AND AN APPARATUS FOR THE IMPLEMENTATION OF THE METHOD**
VERFAHREN ZUM REGELN DES HERSTELLENS VON MINERALFASERN AUS MINERALSCHMELZE MITTELS ZENTRIFUGALKRAFT UND VORRICHTUNG ZUR AUSFÜHRUNG DES VERFAHRENS
PROCEDE DE COMMANDE DE LA FABRICATION DE FIBRES MINERALES A PARTIR D'UNE MASSE MINERALE FONDUE A L'AIDE D'UNE FORCE CENTRIFUGE ET DISPOSITIF UTILISANT LEDIT PROCEDE

(30) Priority: 07.12.1990 FI 906047
(43) Date of publication of application: 22.09.1993
(73) Proprietor: Paroc Group Oy Ab, 01300 Vantaa (FI)
(72) Inventor: HOIKKA, Timo Olavi, SF-21410 Vanhalinna (FI); ASTRAND, Erik Axel, SF-21600 Pargas (FI)
(74) Representative: Haimelin, Jukka Ilmari
(86) International application number: FI9100378
(87) International publication number: WO9210436

(56) References cited:
- EP-A- 0 080 963
- WO-A-92/12940
- AU-B- 135 499
- US-A- 2 398 707
- US-A- 3 159 475
- US-A- 4 210 432

## Description

The invention relates to a method and a device of controlling the generation of fibres according to the preamble of patent claims 1 and 3 respectively.

A fibre generation unit of this type intended for the generation of mineral fibres with the aid of centrifugal force normally consists of two to four fibre generation wheels each forming an entity provided with a drive axle, devices for the supply of air, cooling agent, binding agents and possible other additives. The wheels are permanently installed in a stand on a movable carriage. Fibre generation takes place in such a manner that the mineral melt is conducted onto the peripheral surface of the first wheel in the fibre generation unit from which the melt is thrown in the form of a cascade of drops onto the next adjacent wheel and further onto the subsequent wheel's peripheral surface. The mineral melt fixes onto the peripheral surface of each wheel in the form of a ribbon. Fibre embryos are thrown out of this melt ribbon and are drawn into fibres with the aid of gas jets. The fibres are collected onto a receiving conveyor in the form of a fibre mat. One example of the fibre generation unit of this type is disclosed in WO-A-88/07980 or WO-A-90/15032, the latter falling within the terms of Article 54(3) EPC.

Fibre generation is influenced by various factors. The melt viscosity affects the melt's ability to fix onto the fiberization wheel's peripheral surface and form a melt ribbon from which the fibre embryos are thrown out. There must be a suitable balance prevailing between the amount of melt fixing on the peripheral surface and the amount directly thrown further and thrown out of the melt ribbon in the form of fibre embryos respectively.

The amount of mineral melt flowing down directly affects the force with which the melt hits the peripheral surface and therefore also the amount thrown further onto an adjacent fiberization wheel and the amount forming a ribbon of mineral melt on the peripheral surface respectively.

The fall angle of the mineral melt against the receiving fiberization wheel's peripheral surface is of decisive importance for the formation of the melt route from one fiberization wheel to the next. The melt route in turn influences the yield of fibre from the process; i.e. the amount of fibre received as compared with the amount of mineral melt; and the mineral wool quality.

The fiberization wheels' rotation speed influences the thickness and length of the fibre being generated; higher speeds produce thinner fibres, while thicker fibres are always longer.

In accordance with prior art technology, the fiberization wheels are permanently installed in a stand within a movable carriage. Thus, the fiberization unit can be placed in relation to the falling mineral melt stream so that the stream hits the receiving fiberization wheel surface at a desired point. The carriage position is not adjusted while the process is in progress. It is not possible to adjust the fiberization wheels' mutual positions, which means, among other things, that it is impossible to take into account changes in the drop cascade thrown from a wheel onto an adjacent wheel or influence the melt route.

US Patent 3,159,475 discloses the effect of different rotor configurations in a fiberization unit.

The purpose of this invention is, therefore, to make it possible to control the fiberization wheel position within the fiberization unit in relation to the continuous and/or uncontrollable changes occurring in the process, the amount and consistency of the mineral melt, mineral wool quality and/or the yield of mass from the process.

The objective is reached in accordance with this invention by providing the fibre generation method with the features defined in patent claim 1. The inventive device for implementing the method includes the features defined in claim 3.

In accordance with this invention it is, thus, possible to control the position of one or more fiberization wheels on the basis of impulses obtained from the defined factors influencing the fiberization process. The control applies to the position of the first receiving wheel in relation to the falling melt stream, and the position of at least one more wheel in relation to the other wheels.

The controllable wheel or wheels may be shifted essentially radially while retaining their axial direction and possibly slightly forwards or backwards simultaneously; radially and angularly against their axial direction and possibly slightly forwards or backwards simultaneously.

The factors influencing the fiberization process are the melt properties, such as its temperature and therefore the viscosity; wheel load, which primarily depends on the amount of melt stream per time unit and the fiber properties and amount.

The defined changing melt properties provide the device processor with a "feed forward" impulse and the necessary controls are executed in the fiberization process.

Changes occurring in the melt route, axle load, etc. influence the fibre yield and the ready-made fibre; whereby, measurement values constituting a "feed back" impulse are compared with the pre-set default values and the necessary controls are executed in the fiberization process.

For regulating the fiberization wheel's positions, prior art electronic, hydraulic or pneumatic control is used. Manual control is also possible.

In accordance with an advantageous application, the controllable fiberization wheels are provided with magnetic bearings, while bearing deviations constitute a measure of wheel load changes used for the corresponding control of fibre wheel positions to compensate the wheel load changes.

By controlling the positions of the fiberization wheels, it is thus possible to quickly, on the basis of both the "feed forward" and "feed back" impulses, control the process to change the factors affecting the fiberization process and accomplish an end-product with the required properties.

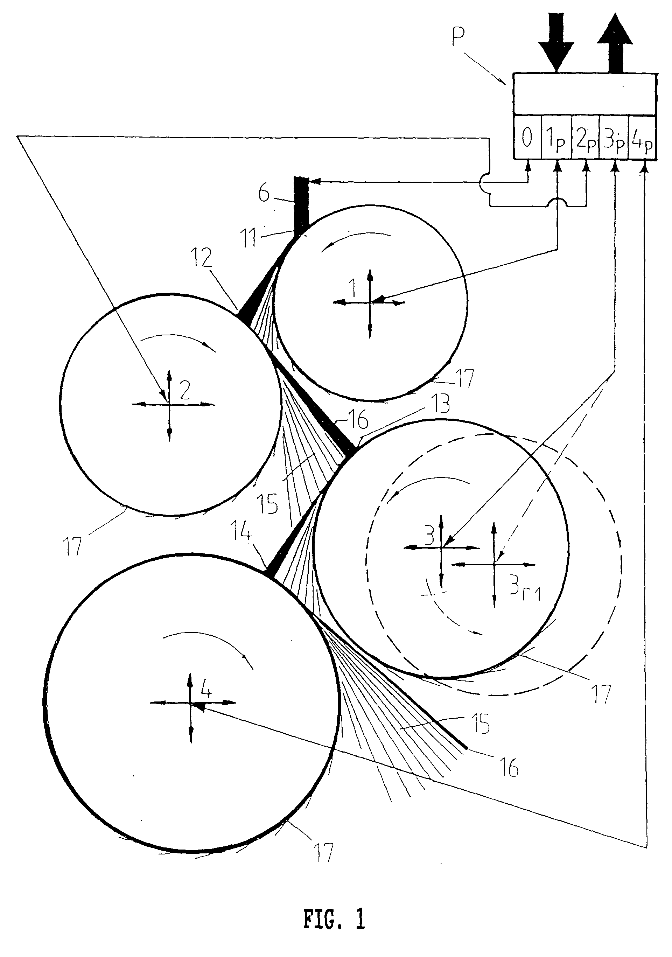

The following is a description of an advantageous implementation device in accordance with the invention with reference to appended drawing where figure 1 shows a draft of a fiberization unit seen from the front and consisting of four fiberization wheels.

The method described in Fig. 1 is not a method in accordance with the invention.

In figure 1, the four fiberization wheels are marked with 1, 2, 3 and 4. The method processor P is drawn with five contact parts, of which the one marked with 0 is in contact with the melt stream; the one marked with 1_{**p**} is in contact with fiberization wheel 1, the one marked with 2_{**p**} is in contact with fiberization wheel 2, etc. The melt stream is indicated by 6, its falling point on the peripheral surface of wheel 1 with 11, on the peripheral surface of wheel 2 with 12, on the peripheral surface of wheel 3 with 13, and on the peripheral surface of wheel 4 with 14. The drop cascade thrown out is generally marked with 15. The melt route has been marked with 16. The melt ribbon around the wheels' peripheral surface has not been drawn, while the melt ribbon section from which the drops are thrown out has been referred to in a rough draft form and has been marked with 17.

In the method in accordance with figure 1, fiberization wheel 3 has been moved downwards at an angle to the right as result of a control issued from the processor section 3_{**p**}. The wheel in its new position drawn with dashed lines is called wheel 3 _{**rl**}. The changed melt route has not been drawn.

The following overall description of the fiberization procedure shows the advantageous aspects of, for example, the reverting of the melt route onto the preceding fiberization wheel.

Melt stream 6 hits the wheel 1 in a certain position with a certain speed. Wheel 1 is to transport the material via predropping phase and impulse transfer by means of the melt quantity and its movement speed in a rapid and most uniform drop cascade onto wheel 2. The drop cascade is to have minimal sectorial spreading; i.e. the predropping must take place rapidly. In order to achieve a rapid predropping from the melt, the wheel 1 must cause a large angular change in the melt.

In the case of successful cascade formation from wheel 1, wheel 2 is hit by a melt stream so far little dispersed, which means that the delay which causes unfavourable drop collisions still remains fairly little. The drop-formed melt stream should now fix as thoroughly as possible onto the melt ribbon on the peripheral surface of wheel 2 constituting the fibre generation surface to be subsequently thrown onto the next fiberization wheel 3 in an effective manner. The higher the drop cascade's impact force against the melt ribbon, the better the fixation of drops onto it, provided that splashing is minimized. The melt ribbon consists of older melt fixed on the wheel's peripheral surface. The melt contained in the melt ribbon is not replaced in step with the continuous flow of new melt, which means that a melt ribbon remains on the peripheral surface.

The fall angle of the drop cascade from wheel 2 onto wheel 3 is again selected in such a manner that a suitable impact force and sectoral spreading are obtained on the peripheral surface. The drop cascade between wheel 2 and wheel 3 always has a higher speed and smaller drops than the one between wheels 1 and 2.

The drop cascade from wheel 2 to wheel 3 often has a rather large sectoral spreading. This causes a great number of drop collisions within the machine's transport section, which is a disadvantage.

Concerning wheel 3, it is even more important for the drop cascade to have a high impact force, as the melt circle rotates faster on wheel 3 than wheel 2.

The smaller size and higher speed of the drops between wheels 2 and 3 facilitates fixation onto the ribbon. It is desirable that the melt leaves the wheel 3 in the form of fibres in great amounts.

The drops in the drop cascade from wheel 3 possess a high speed and small size. A cascade hitting the wheel 4 within a wide sector must have minimum mobility to prevent excessive splashing. A cascade hitting wheel 4 within a wide sector must have minimum mobility in order to avoid excessive splashing. The drop cascade from the wheel 4 should be a small one, because the secondary fiberization taking place after wheel 4 is uncontrollable, and the resulting fibres difficult to impregnate with binding agents.

The above clearly shows that the wheels' position in relation to the melt route is of major importance for the fibre generation to take place with minimal waste and so that the result is uniform, high quality fibres. It is shown, for example, that a low melt stream position on wheel 1 results in poor fixation within the entire machine. It is therefore necessary for the melt stream to hit wheel 2 less tangentially. This in turn makes it necessary to lift wheel 2 so as to avoid splashing.

The position control of the fiberization wheels can advantageously be combined with wheel rotation speed adjustments in compliance with the current fibre generation conditions. The rotation speed of individual wheel axles can also be controllable.

With above arrangements, it is possible to improve the fibre generation process in such a manner that machine capacity, mass output and resulting fibre quality are optimized.

In the case of manual wheel control, the empirical approach is to be applied. By visual inspection of the melt route, specialists are able to judge whether the output is good and the wool quality high or not.

## Claims

1. A method of controlling fibre generation in the manufacture of mineral fibres from mineral melt (6) with the aid of centrifugal force using several cooperating fiberization wheels (1,2,3,4) having axles parallel to each other and being rotated essentially in a common rotation plane in a fiberization unit where the mineral melt flows down onto one (1) of the fiberization wheels from which the melt is thrown further onto an adjacent fiberization wheel (2) with the procedure repeated until the last fiberization wheel (4), with the embryos thrown from the fiberization wheels' peripheral surfaces and drawn into fibres with the aid of gas jets, characterized in that the position of the one, receiving wheel (1) is adjusted in relation to the falling melt stream (6) and the position of at least one more wheel (2, 3, 4) within the fiberization unit is adjusted in relation to the other wheels, essentially in the rotation plane of the fiberization wheels (1, 2, 3, 4), on the basis of measurements on melt temperature, the wheel load, and/or fibre properties/amount.

2. A method as claimed in patent claim 1, characterized in that the position of one or more fiberization wheels (2-4) is individually adjusted.

3. A device for controlling fibre generation in the manufacture of mineral fibres from mineral melt (6) with the aid of centrifugal force, the device comprising at least' two cooperating fiberization wheels (1,2,3,4), the wheels being rotatable essentially in a common rotation plane in a fiberization unit, one (1) of the wheels being arranged to receive the mineral melt (6), an adjacent fiberization wheel (2) being arranged to receive the melt thrown from said one wheel (1), and any further wheels (3,4) being arranged such that this procedure can be repeated until the last fiberization wheel (4) whereby embryos are thrown from the fiberization wheels' peripheral surfaces (11, 12, 13, 14), and the device also comprising means to provide gas jets by which these embryos are drawn into fibres, characterized in that a control means (P) is provided to adjust the position of the receiving fiberization wheel (1) in relation to the falling melt stream (6), and the position of at least one more of the fiberization wheels (2-4) within the fiberization unit in relation to the other wheels essentially in the rotation plane of the fiberization wheels (1, 2, 3, 4) said control means comprising means for measuring melt temperature, the wheel load and/or fibre properties/amount,

4. A device as claimed in patent claim 3, characterized in that at least one of the wheel axles is provided with an element for individual adjustment of the fiberization wheel (2-4) position within the fiberization unit.

5. A device as claimed in claims 3 and 4, characterized in that the axle of at least one of the fiberization wheels is provided with magnetic bearings.

## Patentansprüche

1. Verfahren zur Steuerung der Faserbildung bei der Herstellung von Mineralfasern aus einer Mineralschmelze (6) mit Hilfe der Zentrifugalkraft, unter Anwendung mehrerer zusammenwirkender Zerfaserungsscheiben (1, 2, 3, 4), die parallel zueinander verlaufende Achsen aufweisen und sich im wesentlichen in einer gemeinsamen Rotationsebene in einer Zerfaserungseinheit drehen, wobei die Mineralschmelze (6) von oben auf eine (1) der Zerfaserungsscheiben fließt und von dort weiter nach unten auf eine daran angrenzende Zerfaserungsscheibe (2) geschleudert wird, und sich die Prozedur bis zu der letzten Zerfaserungsscheibe (4) wiederholt, wobei die Keimlinge von den Umfangsflächen der Zerfaserungsscheiben geschleudert und mit Hilfe von Gasströmen zu Fasern ausgezogen werden, **dadurch gekennzeichnet,** dass die Position der einen, aufnehmenden Scheibe (1) in Relation zu dem fallenden Schmelzenstrom (6) angepasst wird, und die Position mindestens einer der weiteren Scheiben (2, 3, 4) innerhalb der Zerfaserungseinheit in Relation zu den anderen Scheiben angepasst wird, im wesentlichen in der Rotationsebene der Zerfaserungsscheiben (1, 2, 3, 4), anhand von Messungen der Temperatur der Schmelze, der Scheibenbelastung und/oder der Eigenschaften/der Menge der Fasern.

2. Verfahren nach Anspruch 1, **dadurch gekennzeichnet,** dass die Position einer oder mehrerer Zerfaserungsscheiben (2 - 4) individuell eingestellt wird.

3. Vorrichtung zur Steuerung der Faserbildung bei der Herstellung von Mineralfasern aus einer Mineralschmelze (6) mit Hilfe der Zentrifugalkraft, wobei die Vorrichtung mindestens zwei zusammenwirkende Zerfaserungsscheiben (1, 2, 3, 4) umfasst, diese Scheiben im wesentlichen in einer gemeinsamen Rotationsebene in einer Zerfaserungseinheit drehbar sind, wobei eine Scheibe (1) die Mineralschmelze (6) in Empfang nimmt, eine angrenzende Zerfaserungsscheibe (2) die von dieser einen Scheibe (1) geschleuderte Schmelze in Empfang nimmt, und die weiteren Scheiben (3, 4) so angeordnet sind, dass diese Prozedur bis zur letzten Zerfaserungsscheibe (4) wiederholt werden kann, wodurch die Keimlinge von den Umfangsflächen (11, 12, 13, 14) der Zerfaserungsscheiben geschleudert werden, und das Gerät auch Mittel zur Bereitstellung von Gasströmen umfasst, durch die diese Keimlinge zu Fasern ausgezogen werden, **dadurch gekennzeichnet,** dass ein Steuerungsmittel (P) bereitgestellt ist, mit dem die Position der aufnehmenden Zerfaserungsscheibe (1) in Relation zu dem fallenden Schmelzenstrom (6) eingestellt wird, und die Position mindestens einer der weiteren Zerfaserungsscheiben (2 - 4) innerhalb der Zerfaserungseinheit in Relation zu den anderen Scheiben eingestellt wird, im wesentlichen in der Rotationsebene der Zerfaserungsscheiben (1, 2, 3, 4), wobei die Steuerungsmittel Mittel zum Messen der Temperatur der Schmelze, der Scheibenbelastung und/oder der Eigenschaften/der Menge der Fasern umfasst.

4. Gerät nach Anspruch 3, **dadurch gekennzeichnet,** dass mindestens eine der Scheibenachsen mit einem Element zur individuellen Einstellung der Position der Zerfaserungsscheiben (2 - 4) innerhalb der Zerfaserungseinheit ausgestattet ist.

5. Gerät nach den Ansprüchen 3 und 4, **dadurch gekennzeichnet,** dass die Achse mindestens einer Zerfaserungsscheibe mit Magnetlagern ausgestattet ist.

## Revendications

1. Procédé de réglage de la génération de fibres dans la fabrication de fibres minérales à partir d'une matière minérale fondue (6) à l'aide de la force centrifuge par utilisation de plusieurs roues de production de fibres en coopération (1,2,3,4) ayant des axes parallèles entre eux, et qui tournent sensiblement dans un plan commun de rotation dans une unité de production de fibres où la matière minérale fondue (6) s'écoule vers le bas sur une (1) des roues de production de fibres à partir de laquelle la matière fondue est à nouveau projetée sur une roue de production de fibres adjacente (2), la procédure étant répétée jusqu'à la dernière roue de production de fibres (4), les embryons étant projetés à partir des surfaces périphériques des roues de production de fibres et étirées en fibres à l'aide de jets de gaz, caractérisé en ce que la position de l'une, la roue réceptrice (1) est réglée en fonction du courant de matière fondue qui tombe (6) et la position d'au moins une autre des roues (2,3,4) dans l'unité de production de fibres est réglée, en relation aux autres roues, sensiblement dans le plan de rotation des roues de production de fibres (1,2,3,4), sur la base des mesures de température de l'écoulement de matière fondue, la charge des roues, et/ou les propriétés/quantités de fibre.

2. Procédé selon la revendication 1, caractérisé en ce que la position d'une ou plusieurs roues (2-4) de production de fibres est ajustée individuellement.

3. Dispositif de réglage de la génération de fibres dans la fabrication de fibres minérales à partir d'une matière minérale fondue (6) à l'aide de la force centrifuge, le dispositif comprenant au moins deux roues de production de fibres (1,2,3,4) en coopération, les roues pouvant tourner sensiblement dans un plan commun de rotation dans une unité de production de fibres, une roue (1) étant disposée pour recevoir la matière minérale fondue (6), une roue adjacente (2) étant disposée pour recevoir la matière fondue projetée par ladite une roue (1), les autres roues (3,4) étant disposées de sorte que cette procédure peut être répétée jusqu'à la dernière roue de production de fbres (4), de sorte que les embryons sont projetés à partir des surfaces périphériques (11,12,13,14) des roues de production de fibres, le dispositif comprenant également des moyens de génération de jets de gaz par lesquels ces embryons sont étirés en fibres, caractérisé en ce qu'au moyen de commande (P) est prévu pour régler la position de la roue réceptrice (1) de production de fibre en relation avec le courant (6) de matière fondue qui tombe, et la position d'au moins une autre roue de production de fibres (2-4) dans l'unité de production de fibres, en relation aux autres zones, sensiblement dans le plan de rotation des roues de production de fibres (1,2,3,4), ledit moyen de commande comprenant des moyens de mesure de la température de l'écoulement de matière fondue, de la charge des roues et/ou des propriétés/quantités de fibres.

4. Dispositif suivant la revendication 3, caractérisé en ce qu'au moins un des axes de roue comporte un élément pour le réglage individuel de la position d'une roue de production de fibres (2-4) dans l'unité de production de fibres.

5. Dispositif suivant une quelconque des revendications 3 ou 4, caractérisé en ce que l'axe d'au moins une des roues de production de fibres est pourvu de paliers magnétiques.
